Europäisches Patentamt

(19) European Patent Office

Office européen des brevets

(11) Publication number: **0 117 322**
**B1**

(12) **EUROPEAN PATENT SPECIFICATION**

(45) Date of publication of patent specification: **11.11.87**

(51) Int. Cl.⁴: **G 09 G 3/04, G 06 F 3/147**

(21) Application number: **83300595.2**

(22) Date of filing: **07.02.83**

(54) **System for displaying alphanumerical messages having stored and real time components.**

(43) Date of publication of application:
**05.09.84 Bulletin 84/36**

(45) Publication of the grant of the patent:
**11.11.87 Bulletin 87/46**

(84) Designated Contracting States:
**BE DE FR GB IT NL SE**

(56) References cited:
**US-A-3 573 791
US-A-4 353 063**

**RADIO FERNSEHEN ELEKTRONIK, vol. 29, no.
11, November 1980, pages 727-730, Berlin, DD;
J.Jüchter: "Mehrfachausnutzung von Displays"**

(73) Proprietor: **THE ARTHUR G. RUSSELL
COMPANY, INCORPORATED
139 Center Street
Bristol Connecticut 06010 (US)**

(72) Inventor: **Dion, Warren E.
108 West Main Street Unit 16
Terryville Connecticut 06786 (US)**

(74) Representative: **Meeks, Frank Burton et al
Urquhart-Dykes & Lord 47 Marylebone Lane
London W1M 6DL (GB)**

Courier Press, Leamington Spa, England.

### Description

Background of the Invention

This invention relates to a system for displaying alphanumerical messages by means of a visual display having a row or other plurality of character stations at each of which a character may be produced by the application thereto of a set of binary coded signals.

The multiple character station display device used in the system of this invention may be any one of a number of different types of such devices wherein each character station includes a number of segments switchable between visible and non-visible states and arranged so as to permit the generation of any one of a set of alphanumeric characters by making visible different combinations of the segments. Examples of such display devices are Nixie tube displays, light emitting diode (LED) displays, liquid crystal displays (LCD) and vacuum fluorescent displays.

In order to accommodate a reasonably large number of character stations in the display device it is known to multiplex the input signals to the character stations. In such a multiplexing scheme time is divided into repetitive time frames each containing a number of time slots equal to the number of character stations and with each time slot being assigned to a respective one of the display stations. During each time frame sets of binary coded signals representing the characters to be displayed at the various display stations are applied in sequence to a character buss, with the signals intended for a particular character station being applied to the buss during that station's time slot, and the character stations are synchronously enabled during their time slots to receive from the character buss the set of binary coded signals intended for them. In the past, the source of binary coded signals applied to a character buss to create displayed messages has generally been memory or other message storing means so that the display messages have been limited to ones which have somehow been established well in advance of their display.

It is also well known to employ multiple character display devices for displaying the instantaneous values of real time variables such as the time of day, or the pressure, temperature, flow rate, RPM or the like existing at some point in an industrial process, but in such cases the display device is usually permanently associated with a single variable or, if it is capable of being switched to any one of a number of variables, does not include the display of any identifying or informative characters in addition to the ones representing the instantaneous value of the selected variable.

In the document "Radio Fernsehen Elektronik", Volume 29, Number 11, November 1980, pages 727 to 730 there is disclosed a system in which a single display unit has N character stations in combination with a plurality of real time measuring units each having an output of N characters. A switching means is provided for connecting a selected one of the measuring units to the display unit so that the display unit then displays the N characters of any one of the associated plurality of measuring devices. The resulting N character display is a complete display or message. There is no disclosure of any means to allow the display of additional characters to explain or identify the significance of the N characters displayed from the selected measuring device. We have identified a need for an improved system in which a more meaningful and complete display can be provided incorporating the instantaneous output of any one of a plurality of real time measuring units.

There is disclosed in US—A—4 353 063 (Devlin) a bus destination sign in which an operator can select from a memory a destination name and can likewise select the appropriate route number to be displayed with the destination name. In this way, by manual selection of the route number by means of a series of manually operable switches, a destination can be displayed in combination with any one of a relatively large number of possible route numbers without the necessity to provide a memory in which the destination name in combination with each of the possible route numbers are stored independently. In this way, the memory requirements of the system are significantly reduced. Nevertheless, this prior disclosure of a display system in which two elements of a complete message are obtained by manual selection from a memory falls considerably short of the requirement we have identified for the purpose of the invention. In the accompanying claims, this prior specification has been used as a basis for determining the two-part division of the main claim.

The present invention has as its object the provision of an embodiment wherein a single multiple character display device may be used to selectively display either messages derived entirely from a memory or messages made up in part of stored message fragments and in part of message fragments derived from real time devices. Thus, for example, the display system may be used in conjunction with an automatic controller for an industrial process and, in accordance with different conditions monitored by the controller, may display complete stored messages advising an operator of the conditions of various aspects of the controlled process, such messages perhaps giving warnings of departures from normal or perhaps giving instructions to the operator for actions to be taken on his part to bring the process back to normal or to otherwise keep it running properly. Additionally, the controller may periodically or at other appropriate times cause the display device to show the instantaneous values of various real time variables existing in the controlled process with each such displayed value having associated with it an informative legend or other supporting multiple character message fragment. In such an application the automatic controller for the involved process makes the selection of messages displayed by the display device; however, the display system of the invention is not limited to such a situation and may be used with various different other kinds of message selecting means.

According to the invention there is provided a system for displaying messages as defined in the accompanying claims.

In an embodiment described below, a message display system includes as the display device a vacuum fluorescent display, a LED display, an LCD display, or the like having a plurality of character stations at each of which any one of a given set of characters may be displayed by the application to the station of a set of binary coded signals. Associated with the display device is a memory and a real time signal means, such as a plurality of sensors, associated with a plurality of real time conditions. The memory stores a plurality of multiple character stored message fragments and the real time signal means provides a selection of real time message fragments each corresponding to a respective one of the real time conditions. A message selector selects one of the stored message fragments and one of the real time message fragments and an associated routing means applies the two selected message fragments to the display device to cause it to display a complete message made up in part of the stored message fragment and in part of the real time message fragment.

The memory additionally stores one or more complete messages and the message selector and routing means are operable to allow such complete stored message to be selected and displayed by the display device.

Still more specifically the embodiment provides for the real time signal means to present the selected real time message fragment in the form of one or more binary coded decimal digits and for the memory to include one message address serving to decode such binary coded decimal digits into binary signals coded in the same code as other characters output from the memory.

Brief Description of the Drawings

Fig. 1 is a block diagram showing schematically a display system embodying this invention.

Fig. 2 is a block diagram showing part of a display system comprising another embodiment of this invention, the parts of the system not shown in Fig. 2 being similar to corresponding parts of the Fig. 1 system.

Detailed Description of the Preferred Embodiments

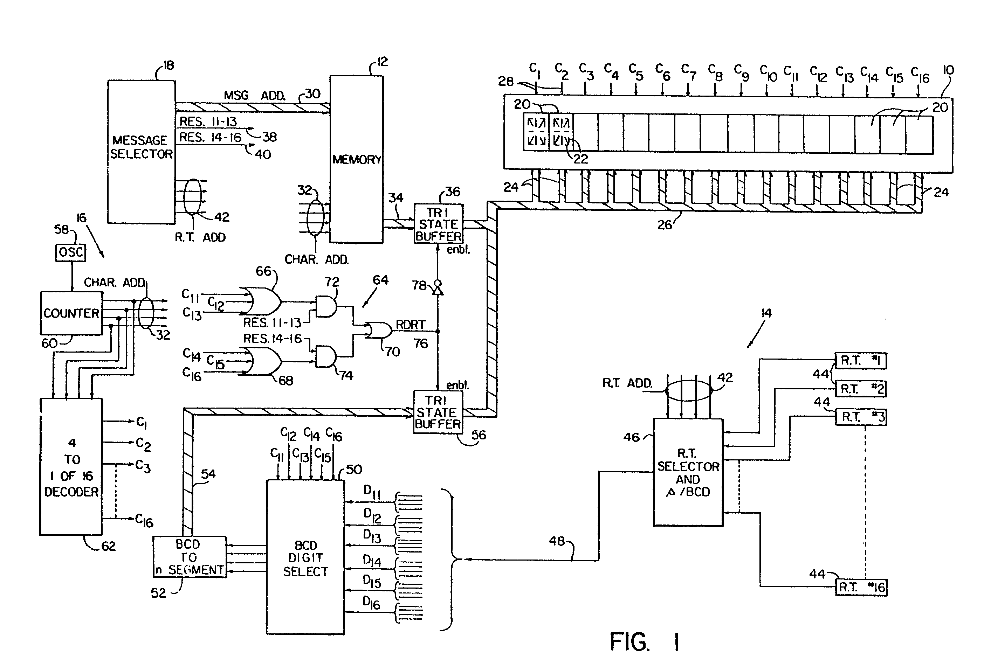

Turning to Fig. 1, a message display system embodying the invention comprises basically a multiple character display device 10, a memory 12 which stores various messages, a real time signal means 14 providing a selection of real time message fragments, a clock means 16 and a message selector 18.

The particular display device used in any given embodiment of the invention may vary widely and it may for example be an LED display, a Nixie tube display, an LCD display or a vacuum fluorescent display. In any event, it has a plurality of character display stations each having a number of display segments or elements which are switchable between illuminated and non-illuminated states, or otherwise between visible and non-visible states, and arranged so that by illuminating or making visible various combinations of the segments different alphanumerical characters may be generated. The number of character display stations and the number of display segments at each station may also vary without departing from the invention. By way of example, however, the illustrated display device 10 has sixteen character display stations 20, 20 and is a vacuum fluorescent display wherein each display station 20 has nineteen display segments 22, 22. As indicated in the two left-most display stations, sixteen of these segments 22, 22 are arranged as shown to accommodate the generation of any one of a relatively large set of alphanumeric characters and three other elements, not shown, are provided at each display station for accommodating the generation of a comma, an apostrophe and a period.

In accordance with the broader aspects of the invention, each character display station 20 of the display device has a set of input terminals or its equivalent, indicated at 24, through which a binary signal having a number of bits equal to the number of display segments 22, 22 of each station is made available to the display station, and all of the sets 24, 24 of input terminals are connected to or are part of a character buss 26; and each display station 20 also has an associated enable terminal 28 which when supplied with an enabling signal gates the binary coded signal then appearing at the associated input terminal set 24 to the display station to cause the illumination or the otherwise making visible of display segments 22, 22 in the combination dictated by the input binary coded signal. In the case of the illustrated vacuum fluorescent display 10 each display segment 22 is an anode segment, and corresponding anode segments of all of the display stations are electrically connected together to provide nineteen anode terminals, nineteen being the number of display segments of each display station, so that such nineteen anode terminals from the illustrated character buss 26; and each display station has its own individual grid with a terminal constituting its illustrated enable terminal 28.

The memory 12 may take various different forms and stores a number of messages each assigned a number of character storage locations equal in number to the number of character display stations of the display device 10. Thus, in the illustrated case, for each stored message the memory 12 has sixteen character storage locations. The stored messages are selected by a binary coded message address signal supplied on a multiple conductor address line 30 and applied to address terminals of the memory 12. The individual character locations of a selected message are in turn selected by a character address signal supplied by a four conductor character address line 32 connected to four corresponding address terminals of the memory. Therefore, at any given instant of time the message address signal (MESG. ADD.) supplied on the line 30 selects a given message stored in the memory 12 and the character address signal (CHAR. ADD.) supplied on the line 32 selects a particular one of the sixteen character locations of the selected message. The information stored at the character location so selected is output from the memory on a multiple conductor output line 34 in the form of a nineteen bit coded binary signal and such output signal is supplied to the character buss 26 through a tri-state buffer 36 when such buffer is enabled by an enabling signal as hereinafter described.

The messages stored in the memory 12 includes at least one where all of the sixteen associated character locations of the memory stored information to be displayed by the display device 10 and also includes at least one message where some of the associated character locations of the memory do not store characters to be displayed by the device 10. Messages containing display information at all sixteen of their character locations are referred to as "complete stored messages", and messages containing display information at least than all of their sixteen character locations are referred to as "stored message fragments".

In Fig. 1 the sixteen character display stations 20, 20 of the display 10 are numbered 1 to 16 going from left to right and the sixteen character locations of each message stored in the memory are correspondingly numbered 1 to 16. The length of a stored message fragment may vary in different embodiments but in the embodiment of Fig. 1 it may be either thirteen characters long or ten characters long. More specifically, for each stored message either three or six of the display stations of the display 10 may be reserved for the display of real time information and when such stations are reserved no meaningful information is stored in the corresponding character locations of the memory. Such reservation is indicated by reserve signals appearing on lines 38 and 40 and produced by the message selector 18. The "RES 11—13" signal when it appears on the line 38 reserves display stations 11, 12 and 13 for the display of real time data and the "RES 14—16" signal when it appears on the line 40 reserves display stations 14, 15 and 16 for the display of real time data. When both reserve signals appear at the same time all six display stations 11 to 16 are reserved for the display of real time data.

The message selector 18 selects the message to be displayed by the display device 10. This is done by outputting a binary coded message address signal (MSG. ADD.) on the address line 30 which addresses a given complete message or message fragment stored in the memory 12. The message selector also provides, when required, reserve signals on the lines 38 and 40 and a binary coded real time address signal (R.T. ADD.) on a four conductor real time address line 42. When the message selector addresses a complete stored message in the memory 12 it also produces no reserve signals on the reserve signal lines 38 and 40. When the message selector addresses a stored message fragment in the memory 12 a reserve signal appears on the line 38, or on the line 40, or on both lines 38 and 40 depending on the particular character stations to be reserved, and at the same time the message selector provides the real time address line 42 with a binary coded real time address signal (R.T. ADD.) for selecting the real time data to be supplied to the reserved display stations of the display device 10 as hereinafter described in more detail.

The message selector 18 may be implemented in many different ways without departing from the scope of the invention. As an example it may be part of an automatic controller or monitoring device for a manufacturing, material handling, chemical or other industrial process. In accordance with different conditions monitored by the controller, the controller may operate to select messages from the memory 12 which when displayed by the device 10 advises an operator of the state of a monitored condition, provides a warning, gives an instruction or the like, or the controller may also select a message fragment from the memory 12 to which is added real time data from the real time signal means 14.

The real time signal means 14 has a number of devices providing real time data representing the value of real time variables or other associated real time conditions. In Fig. 1 sixteen such real time devices are indicated at 44, 44. Any one of these real time devices 44, 44 may for example be a clock providing a time of day signal, a counter providing a signal representing the accumulated count of some variable, a pressure sensor providing a signal representing the value of a detected pressure, a temperature sensor providing a signal representing the value of a detected temperature or any one of a host of other similar such detectors or sensors. The output signals from the devices 44, 44 may either be analog signals or binary coded decimal signals and are all connected to a real time selector and analog to binary coded decimal convertor module 46. The real time address signal (R.T. ADD.) is supplied to the module 46 and in response to this the module selects one of the real time devices 44, 44 and transmits its output signal to the output line 48. The signal supplied to the output line 48 is in binary coded digital form and if the signal supplied by the selected real time device 14 is in analog form the module 46 converts it into binary coded decimal form before transmission to the line 48. The line 48 consists of six sets of four conductors each of which sets transmits one binary coded decimal digit, the six individual digits so transmitted being indicated at $D_{11}$ to $D_{16}$ in Fig. 1. The number of digits transmitted depends on the selected real time device 44 and may be either three digits or six digits. If three digits are transmitted such digits may appear as digits $D_{11}$, $D_{12}$ and $D_{13}$ or as $D_{14}$, $D_{15}$ and $D_{16}$. If six digits are transmitted they appear as the illustrated digits $D_{11}$ to $D_{16}$.

The binary coded decimal line 48 is connected to a BCD digit select module 50. In response to enable signals $C_{11}$ to $C_{16}$ also supplied to the module 50 this module at proper times selects one of the digits $D_{11}$ to $D_{16}$ and transmits it to the module 52. More particularly, the digit $D_{11}$ is transmitted during the appearance of enable signal $C_{11}$, the digit $D_{12}$ is transmitted during the appearance of $C_{12}$, and so forth. The module 52 in turn converts the binary coded decimal digit transmitted to it into a nineteen bit binary coded signal. This latter signal is in turn transmitted to the output line 54 and when an associated tri-state buffer 56 is enabled it is injected onto the character buss 26.

The clock means 16 includes an oscillator 58 driving a sixteen state counter 60 having four output terminals connected to the four conductors or the character address line 32, the output of the counter therefore being the character address (CHAR. ADD.) signal which accordingly shifts sequentially through its sixteen different states or addresses. Each cycle through the sixteen different states or addresses of the character address signal therefore defines a time frame having sixteen time slots during each of which slots a different character address appears on the lines. Connected to the output of the counter 60 is a four to one of sixteen decoder 62 which decodes the character address signal into one of sixteen enabling signals $C_1$ to $C_{16}$ supplied to respectively associated enable terminals 28, 28 of the display device 10. The enable signals $C_1$ to $C_{16}$ are, of course, produced in synchronism with the sequencing of the character address signal and the connections are such that when the character address signal addresses memory location 1 of the selected message enable signal $C_1$ simultaneously appears and enables character display station number 1 of the display device, when the character address signal addresses location 2 of the selected message enable signal $C_2$ simultaneously appears and enables character display station number 2, and so forth.

The enable signals $C_{11}$ to $C_{16}$ and the two reserve signals RES 11—13 and RES 14—16 are also transmitted to a logic circuit 64 consisting of three OR gates 66, 68 and 70 and two AND gates 72 and 84. The circuit 64 functions to produce a RDRT signal on the line 76 when the enable signals $C_{11}$, $C_{12}$ or $C_{13}$ occur simultaneously with reserve signal RES 11—13 and to produce a similar RDRT signal on the line 76 when the enable signals $C_{14}$, $C_{15}$ and $C_{16}$ appear simultaneously with the reserve signal RES 14—16. When the RDRT signal appears it enables the tri-state buffer 56 and disables the tri-state buffer 36 through the inverter 78.

Therefore, when the message selector 18 selects a message fragment from the memory 12 and produces an RES 11—13, signal, to indicate the reservation of display stations numbers 11, 12 and 13, each time enable signals $C_{11}$, $C_{12}$ and $C_{13}$ appear in a time frame the tri-state buffer 36 is disabled to disconnect the memory 12 from the character buss 26 and the tri-state buffer 56 is enabled to instead inject the real time signal from the module 52 onto the character buss 26. Similarly, if the selected message fragment is accompanied by the reserve signal RES 14—16, when the enable signals $C_{14}$, $C_{15}$ and $C_{16}$ appear the buffer 36 is disabled and the buffer 56 is enabled. Of course, it will be understood that when the buffer 56 is enabled during the appearance of enable signal $C_{11}$ the digit select module 50 is also conditioned by the enable signal $C_{11}$ to select digit $D_{11}$, when the buffer 56 is enabled during the appearance of enable signal $C_{12}$ the digit select module 50 is conditioned by the enable signal $C_{12}$ to select $D_{12}$ and so forth. The result of this is that when a stored message fragment is selected from the memory 12 by the message address signal, display stations number 1 to 10 will display information derived from the memory. If reserve signal RES 11—13 accompanies the message address signal display stations number 11, 12 and 13 will display real time data derived from a selected one of the real time devices 44, 44. If the reserve signal RES 14—16 accompanies the message address signal display stations number 14, 15 and 16 will display real time data derived from a selected real time device 44. If either reserve signal is not present during the selection of a message fragment, the display stations otherwise reserved by that signal may be used to display information derived from the memory 12. The complete displayed message therefore may consist of a maximum of either ten or thirteen characters derived from the memory and a corresponding maximum of either six or three characters derived from the real time devices 44, 44. When a complete stored message is selected from the memory 12 neither of the reserve signals appear, so that the buffer 36 is enabled and the buffer 56 disabled during each time slot of each frame to cause all sixteen display stations of the display to display information derived from the memory.

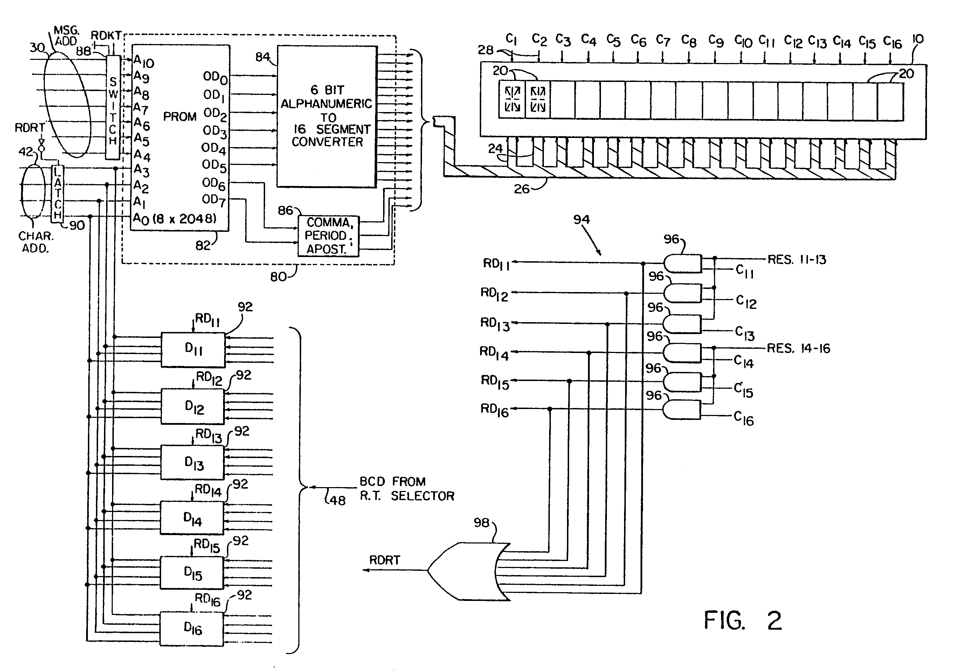

Fig. 2 shows another display system embodying this invention. In this figure, the real time signal means 14, the clock means 16 and the message selector 18 have been omitted for convenience, but it should be understood that such components are included in the system and that they may be identical to the corresponding components of Fig. 1. That is, in the system of Fig. 2 a real time signal means, which may be similar to that shown at 14 in Fig. 1 supplies a real time signal, selected from a plurality of such signals, which appears in binary coded decimal form on the line 48. The signal may consist of six digits $D_{11}$ to $D_{16}$, three digits $D_{11}$, $D_{12}$ and $D_{13}$ or three digits $D_{14}$, $D_{15}$ and $D_{16}$. Likewise, a clock means similar to the clock means 16 is included in the Fig. 2 system and provides character address signals on the line 42 and enable signals $C_1$ to $C_{16}$, which character address signals and enable signals synchronously sequence through sixteen states during repetitive time frames in the same manner as discussed in connection with Fig. 1. Also, a message selector similar to the selector 18 of Fig. 1 is included in the Fig. 2 system and provides a message address signal (MSG. ADD.) on the line 30 and, when the selected message is a stored message fragment, either a RES 11—13 signal or an RES 14—16 signal or both, depending on which character display stations of the display device 10 are to be reserved for the display of real time characters. The message selector also produces real time address signals (not shown in Fig. 2) which control the selection of the real time signal applied to the line 48.

Fig. 2 differs from Fig. 1 in that the message storing memory is shown in more detail and also in that this message storing memory is additionally used to convert the binary coded decimal digits from the lines 48 into nineteen bit binary coded form for application to the character buss 26.

In the system of Fig. 2 the memory is indicated at 80 and is made basically from two standard components, namely an $8 \times 2048$ bit prom 82 and a six bit alphanumeric to sixteen segment converter 84, plus a comma, period and apostrophe logic circuit 86. The prom 82 has eleven address terminals $A_0$ to $A_{10}$ and eight output data terminals $OD_0$ to $OD_7$. The address terminals $A_4$ to $A_{10}$ are connected to corresponding output terminals of a switch 83 controlled by an RDRT signal. When the RDRT signal is absent the address terminals $A_4$ to $A_{10}$ are connected through the switch 88 to corresponding ones of the conductors of the message address line 30 to receive the message address signal (MSG. ADD.) supplied by the message selector. When the RDRT signal is present, the switch 88 connects all of the address terminals $A_4$ to $A_{10}$ to ground, thereby addressing message number 0000000. The remaining four address terminals $A_0$ to $A_3$ of the prom 82 are connected to the character address line 42 through a latch 90 also controlled by the RDRT signal. When the RDRT signal is absent the latch transmits the character address signal (CHAR. ADD.) appearing on the four conductors of the line 42 to the four address terminals $A_0$ to $A_3$ and when the RDRT signal is present the character address line 42 is disconnected from the address terminals $A_0$ to $A_3$.

The four address terminals $A_0$ to $A_3$ of the prom 82 are also connected in parallel to six latches 92, 92 for the six sets of conductors of the BCD signal line 48. These six latches are in turn controlled respectively by enable signals $RD_{11}$ to $RD_{16}$. When the $RD_{11}$ signal appears, the associated latch 92 is enabled to transmit the associated digit $D_{11}$ from the line 48 to the address terminals $A_0$ to $A_4$ of the prom, when the $RD_{12}$ signal appears the associated latch 92 is enabled to transmit the associated digit $D_{12}$ to the prom, etc. A logic circuit 94 is provided to produce the $RD_{11}$ to $RD_{16}$ enable signals and the RDRT signal, it consisting of six AND gates 96 and one OR gate 98. From inspection of this circuit it can be seen that the $RD_{11}$, $RD_{12}$ and $RD_{13}$ enable signals are produced respectively during the appearances of the $C_{11}$, $C_{12}$ and $C_{13}$ enable signals when the RES 11—13 signal is present, and likewise the $RD_{14}$, $RD_{15}$ and $RD_{16}$ enable signals are produced during the appearance of the enable signals $C_{14}$, $C_{15}$ and $C_{16}$ when the RES 14—16 signal is present. When the RES 11—13 signal is present the RDRT signal is produced during the appearances of signals $C_{11}$, $C_{12}$ and $C_{13}$ and when the RES 14—16 signal is present the RDRT signal is producing during the appearance of signals $C_{14}$, $C_{15}$ and $C_{16}$.

Each character storage location of the prom 82 has eight binary cells storing binary bits which appear at the eight output terminals $OD_0$ to $OD_7$ when that character storage location is addressed through the address terminals $A_0$ to $A_{10}$. Six of the output bits appearing at output terminals $OD_0$ to $OD_5$ represent a stored character in a six bit alphanumeric code and these six bits are transmitted to the six bit alphanumeric to sixteen segment converter 84 which converts the input character into a sixteen converter 84 which converts the input character into a sixteen segment coded signal applied to an associated sixteen conductors of the character buss 26. The remaining two bits stored at each character storage location, and appearing at prom output terminals $OD_6$ to $OD_7$, determine whether the character defined by the associated bits appearing at output terminals $OD_0$ to $OD_5$ is to be accompanied by a comma, a period, an apostrophe or no such punctuation, and these two bits are transmitted to the logic 86 which converts them to a three-bit code applied to three other conductors of the character buss 26.

The operation of the system of Fig. 2 may now be described as follows. If the message address (MSG. ADD.) signal provided by the message selector and appearing on the message address line 30 addresses a complete stored message the message selector at the same time also produces no RES 11—13 and no RES 14—16 reserve signals and accordingly no RDRT signals are produced in any time slot during repetitive time frames. Therefore, throughout all time slots of each time frame the switch 88 and the latch 90 apply the message address signal from the line 30 and the character address from the line 42 to the prom to cause sequential and repetitive outputting of sixteen stored characters from the prom which are applied to the character buss 26 through the converter 84 and logic 86 to in turn cause the generation of characters in the sixteen data display stations of the display device 10. In this connection it should be noted that some character locations of a message may store "blank" characters which correspond to no segments of a display station being illuminated or made visible and which may be used to create empty spaces in the displayed message, but such "blank" characters are nevertheless "characters" as such term is used herein.

If the message addressed by the signal on the message address line 30 is a stored message fragment the message selector also produces either a RES 11—13, an RES 11—14 signal, or both, to reserve display stations number 11, 12 and 13, or display stations number 14, 15 and 16, or all six display stations number 11 through 16 for the display of real time data. For example, assume that in addition to selecting a stored message fragment the message selector also produces an RES 14—16 signal. Then in each time frame during the appearances of enable signals $C_1$ through $C_{13}$ the RDRT signal is absent and stored characters will be output from the prom 82 and applied to the character buss 26 in the same manner as described above. However, during time slots defined by enable signals $C_{14}$, $C_{15}$ and $C_{16}$ an RDRT signal is produced and also produced are corresponding enable signals $RD_{14}$, $RD_{15}$ and $RD_{16}$. The appearance of the RDRT signal at the switch 88 conditions the switch to connect all address terminals $A_4$ to $A_{10}$ to ground to call for stored message number 0000000. The message stored at this message address is a decoding message for converting a digit applied in binary coded decimal form to the address terminals $A_0$ to $A_3$ to the same digit in a six bit alphanumeric code appearing at the output terminals $OD_0$ to $OD_5$. Accordingly, when a particular binary coded decimal digit is applied to the $A_0$ to $A_3$ terminals the same digit appears at the output terminals $OD_0$ to $OD_5$ in six bit alphanumeric form.

The RDRT signal also opens the latch 90 to disconnect the character address signal on the line 42 from the address terminals $A_0$ to $A_3$. During the time slot defined by enable signal $C_{14}$ the $RD_{14}$ signal enables the latch 92 for digit $D_{14}$ to cause that digit in binary coded decimal form to be applied to the address terminals $A_0$ to $A_3$. Since the prom is now set to the decoding message, the same digit appears at output terminals $OD_0$ to $OD_5$ in six bit alphanumeric form and in this form is transmitted to the convertor 84 which converts it to sixteen segment form for application to the character buss 26 through which it is routed to the number 14 display station of the display device by the then appearing enable signal $C_{14}$. Similarly, during the time slots defined by enable signals $C_{15}$ and $C_{16}$ the digits $D_{15}$ and $D_{16}$ are converted from BCD to six bit alphanumeric form by the prom, converted to sixteen segment form by the converter 84 and applied to the character buss 26 to generate representations thereof in display stations number 15 and 16 of the display device. The final result therefore is that the display 10 will display a message consisting of a stored message fragment appearing in display stations number 1 to 13 and of a real time message fragment appearing in display stations 14, 15 and 16.

If reserve signal RES 11—13 appears with the message address signal, instead of reserve signal RES 14—16, then the operation is the same as described for the appearance of reserve signal RES 14—16 except that the real time fragment of the displayed message will appear in display stations numbers 11, 12 and 13. If both reserve signals RES 11—13 and RES 14—16 appear along with the selected message address then the operation again is substantially as described except that each displayed message will have real time data displayed in display stations 11 through 16.

**Claims**

1. A system for displaying messages, the system comprising:
(1) a unitary visual display device (10) having a plurality of character stations (20, 20) at each of which stations any one of a given set of characters may be displayed by the application of a set of binary coded signals;
(b) a memory (12, 80) having means for storing a plurality of message fragments each consisting of a plurality of stored sets of binary coded signals representing a corresponding plurality of characters;
(c) a message selector (18) having means for selecting from said message fragments stored in said memory; and
(d) routing means (16, 64, 50, 52, 36, 56, 26, 28, 92, 94, 88, 90) for substantially simultaneously applying said stored sets of binary coded signals of said selected stored message fragments to corresponding first ones of said character stations in a one-signal-set-to-a-one-character-station manner such that each stored set of binary coded signals is transmitted directly its corresponding character station without being transmitted to any other of said character stations;
characterised by
(e) a real time signal means (14) having a plurality of devices providing real time data representing the value of a plurality of real time conditions and providing a plurality of varying real time message fragments each of which real time message fragments corresponds to a respective one of said real time conditions and each of which real time message fragments consists of at least one real time set of binary coded signals representing at least one character, each of said real time message fragments varying in time with variations in the value of its corresponding real time condition so as to represent at any given instant the instantaneous value of said corresponding condition;
(f) said message selector (18) having means for simultaneously selecting from said plurality of stored message fragments and from said plurality of varying real time message fragments to cause the display of a meaningful complete message comprising two such fragments; and
(g) said routing means serving to apply substantially simultaneously with the application of said stored sets of binary coded signals to said first ones of said character stations said at least one set of binary coded signals of said selected real time message fragment to a corresponding at least one other of said character stations different from said first ones of said character stations in a one-signal-set-to-a-one-character-station manner such that each real time set of binary coded signals is transmitted directly to its corresponding character station without being transmitted to any other of said character stations to cause said device to immediately display a complete unitary visual message made up in part of characters derived from said selected stored message fragments and in part of at least one character derived from said selected real time message fragment, and which at least one character derived from said selected real time message fragment may vary independently of the characters derived from said selected stored message fragment in keeping with variations in the value of the corresponding real time condition.

2. A system for displaying messages as defined in claim 1 further characterized by said real time signal means (14) providing a plurality of real time message fragments each consisting of a plurality of real time sets of binary coded signals representing a corresponding number of characters, and said routing means including means (36, 56, 26) for applying said plurality of real time sets of binary coded signals to a corresponding plurality of said character stations different from the stations to which said plurality of stored sets of binary coded signals are applied.

3. A system for displaying messages as defined in claim 1 further characterized by said routing means being a multiplexing means (16, 26, 28) for repetitively applying the plurality of sets of binary coded signals making up a complete message to the corresponding character stations of said display device.

4. A system for displaying messages as defined in claim 1 further characterized by each of said character stations of said display device (10) having a set (24) of data input terminals and each of said character stations (20, 20) having an enable terminal (28) which may be supplied with an enable signal to enable the signal appearing at its data input terminal to enter the station to produce a visual character, and said routing means including a data buss (26) connected to the input terminal sets of all of said character stations, means for sequentially applying the sets of coded binary signals making up a complete message to said data buss, and means for sequentially applying an enable signal to said enable terminals (28, 28) of said character stations in phase with the application of said sets of binary coded signals to said data buss.

5. A system for displaying messages as defined in any one of claims 1 to 4 further characterized by said memory (12, 80) also having means for storing at least one complete message consisting of a plurality of stored sets of binary coded signals representing a corresponding plurality of characters, said message selector (18) also having means for selecting said at least one complete message stored by said memory, and said routing means including means for applying the stored sets of binary coded signals of a selected stored complete message to corresponding ones of said character stations (20, 20) to cause said display device to display a complete visual message made up entirely of characters derived from the selected stored complete message.

6. A system for displaying messages as defined in claim 5 further characterized by said stored sets of binary coded signals representing said at least one complete message being equal in number to the number of character stations (20, 20) of said visual display device (10).

7. A system for displaying messages as defined in any one of the preceding claims, characterised in that said memory (12, 80) also has means for storing a plurality of complete messages each consisting of a plurality of stored sets of binary coded signals, said message selector (18) having means for selecting one of said complete stored messages, and said routing means (16, 64, 50, 52, 36, 56, 26, 28, 92, 94, 88, 90) also being operable when a complete stored message is selected by said message selector for applying in a one-signal-set-to-a-one-character-station manner such that each stored set of binary coded signals is transmitted directly to its corresponding character station without being transmitted to any other of said character stations, the plurality of sets of binary coded signals comprising said complete stored message being transmitted to corresponding ones of said character stations to cause said display device to immediately display a complete visual message made up entirely of characters derived from said selected complete stored message.

8. A system for displaying messages as defined in claim 7 further characterized by said stored sets of binary coded signals representing said at least one complete message being equal in number to the number of character stations of said visual display device (10).

9. A system for displaying messages as defined in claim 7 or claim 8 further characterized by said memory (12) having means for storing a plurality of stored message fragments, and said real time signal means having means (44, 92) providing a selection of real time message fragments.

10. A system for displaying messages as defined in claim 9 further characterized by each of said selection of real time message fragments consisting of a plurality of sets of binary coded signals representing a corresponding plurality of characters.

11. A system for displaying messages as defined in any one of the preceding claims characterised by said visual display device (10) having a character buss (26) to which a set of binary signals may be applied, a plurality of enable terminals (28, 28) each associated with a respective one of said character stations, and means operable in response to the application of an enable signal to any one of said enable terminals for applying the set of binary coded signals then appearing on said buss to the character station corresponding to said one enable terminal, and by the provision of clock means (16) defining repetitive time frames each divided into a plurality of successive character time slots defined by a successive plurality of character enable signals each applied to the enable terminal (28) of a respective one of said character stations, and by the provision of means (60, 12, 50, 36, 56) operable during each frame for successively applying said stored sets of binary coded signals to said buss (26) in synchronism with some of said enable signals, and means operable during each frame for successively applying said plurality of real time binary coded signals to said buss in synchronism with other of said enable signals.

12. A system for displaying messages as defined in claim 11, characterised by said memory (12, 80) having means for storing a plurality of messages addressable through a set of message address terminals for addressing said stored message fragments, said memory having for each of said messages a plurality of storage locations addressable through a set of character address terminals, which plurality of stored locations is equal in number to the number of character stations of said visual display device, and at each of which storage locations a set of binary coded signals representing a character may be stored, some of said stored messages being complete messages and some others being message fragments, said message selector (18) providing a selectively variable set of message address signals for application to said message address terminals of said memory for selecting one of the messages stored in said memory, said message selector also including means for producing a real time condition selecting signal selecting of one said real time message fragments of said real time sensing means, and means for producing a reserve signal when the stored message addressed by the set of message address signals selected by said message selector is a message fragment, said means (60, 12, 50, 36, 56) operable during each frame for successively applying said stored sets of binary coded signals to said buss (26) comprising character addressing means (60) synchronised with said clock means and providing a sequentially varying set of character address signals applied to said character address terminals of said memory during successive ones of said time slots to sequentially address the character locations of the addressed message in synchronism with said enable signal so that when the $i$th character location of a message is addressed the $i$th character station of said visual display device is exclusively enabled, and by means responsive to the absence of said reserve signal for applying to said character buss (26) binary coded signals stemming from said memory during the occurrence of all of said enable signals of each frame whereby the total displayed message is made up entirely of a stored message derived from said memory, and by means responsive to the presence of said reserve signal for applying to said character buss (26) binary coded signals stemming from said memory during the occurrence of some of said enable signals of each frame and for applying to said character buss binary coded signals stemming from the real time condition selected by said real time condition selecting signal during the occurrence of other of said enable signals of each frame whereby the total displayed message is made up in part of a stored message fragment derived from said memory and in part of a real time message fragment derived from said real time conditions.

13. A system for displaying messages as defined in claim 12 further characterized by said real time signal means including means for providing for the real time condition selected by said real time condition selecting signal a real time message fragment consisting of a plurality of digits in binary coded decimal form, said memory (82) having one decoding message wherein the data stored at the various storage locations of the memory associated with that message are such that when a binary coded decimal signal is applied to said character select terminals the output from said memory (12) defines the digit represented by said binary coded decimal signal in the same code as other characters output from said memory when other messages are addressed, means (88) forcing said message address terminals to the address of said decoding message when said reserve signal is present and during the occurrence of time slots reserved by said reserve signal, and means (90, 92) operable when said reserve signal is present and during the occurrence of time slots reserved by said reserve signal for successively applying said plurality of binary coded decimal digits to said character address terminals to the exclusion of character address signals from said character addressing means.

14. A system for displaying messages as defined in claim 12 or claim 13 further characterized by each of said display stations of said visual display having $n$ segments (22, 22) each of which may be individually made visible or not visible and which are arranged so that by simultaneously making visible different combinations of segments different characters may be formed, and said memory (12) at each of said storage locations having $n$ binary cells storing a binary signal having $n$ bits associated respectively with the $n$ segments of a display station and coding a character in accordance with the visible state or non-visible state of each of such $n$ segments as required to form that character at the display station.

15. A system for displaying messages as defined in claim 12 or claim 13 further characterized by each of said display stations of said visual display (10) having $n$ segments (22, 22) each of which may be individually made visible or not visible and which are arranged so that by simultaneously making visible different combinations of segments different characters may be formed, said memory (82) at each of said storage locations having $x$ binary cells storing a character in an $x$ bit code where $x$ is less than $n$, and a code converter (84) between said memory in said buss for converting the characters output from said memory in said *X* bit code into an *n* bit code wherein the *n* bits of each character correspond respectively to said *n* segments of a display station.

## Patentansprüche

1. System zur Anzeige von Nachrichten, bestehend aus

a) einer einheitlichen Sichtanzeigevorrichtung (10) mit einer Mehrzahl von Zeichenstellen (20, 20), von denen jede einen gegebenen Satz von Zeichen durch Anlegen eines Satzes von binärcodierten Signalen anzeigen kann;

(b) einem Speicher (12, 80) mit Einrichtungen zur Speicherung einer Mehrzahl von Nachrichtenfragmenten, von denen jedes aus einer Mehrzahl von gespeicherten Sätzen binärcodierter Signale besteht, die eine entsprechende Mehrzahl von Zeichen darstellen;

c) einem Nachrichtenwähler (18) mit Einrichtungen zur Auswahl aus den genannten, in dem Speicher gespeicherten Nachrichtenfragmenten und

d) Steuereinrichtungen (16, 64, 50, 52, 36, 56, 26, 28, 92, 94, 88, 90) zum im wesentlichen gleichzeitigen Anlegen der gespeicherten Sätze binärcodierter Signale der ausgewählten, gespeicherten Nachrichtenfragmente an eine entsprechende Zeichenstelle in der Weise eines Einsignalsatzes zu einer Einzeichenstelle, derart, daß jeder gespeicherte Satz der binärcodierten Signale direkt an die entsprechende Zeichenstelle übertragen, wird, ohne auf irgendeine andere Zeichenstelle übertragen zu werden,

gekennzeichnet durch

e) eine Echtzeitsignaleinrichtung (14) mit Vorrichtungen zur Erzeugung einer Mehrzahl von Echtzeitdaten, welche den Wert einer Mehrzahl von Echtzeitbedingungen darstellen und eine Mehrzahl von verschiedenen Nachrichtenfragmenten in Echtzeit erzeugen, von denen jedes einer Echtzeitbedingung entspricht und aus mindestens einem Satz binärcodierter Signale in Echtzeit besteht, welche mindestens ein Zeichen darstellen, wobei jedes der Nachrichtenfragmente in Echtzeit sich mit der Zeit durch Veränderung im Wert der entsprechenden Echtzeitbedingung verändert, um in einem gegebenen Augenblick den augenblicklichen Wert der entsprechenden Bedingung darzustellen;

f) in der genannten Auswahleinrichtung (18) enthaltene Einrichtungen zur gleichzeitigen Auswahl aus der genannten Mehrzahl von gespeicherten Nachrichtenfragmenten und aus der genannten Mehrzahl der veränderten Nachrichtenfragmente in Echtzeit zur Anzeige einer wesentlichen, zwei derartiger Fragmente enthaltenden, vollständigen Nachricht, und durch

g) Steuereinrichtungen zum im wesentlichen gleichzeitigen Anlegen der genannten, gespeicherten Sätze binärcodierter Signale an die ersten Zeichenstellen mit dem Anlegen mindestens eines Satzes binärcodierter Signale der genannten, ausgewählten Nachrichtenfragmente in Echtzeit an eine entsprechende, mindestens eine andere der genannten Zeichenstellen, verschieden von der ersten der genannten Zeichenstellen, in der Weise eines Einsignalsatzes zu einer Einzeichenstelle, derart, daß jeder Satz binärcodierter Signale in Echtzeit direkt und ohne an eine andere Zeichenstelle übertragen zu werden, zu seiner entsprechenden Zeichenstelle übertragen wird, um zu bewirken, daß die genannte Vorrichtung unmittelbar eine vollständige Einheit einer visuellen Nachricht anzeigt, welche teilweise aus Zeichen, die von den genannten, gespeicherten Nachrichtenfragmenten abgeleitet sind, und aus mindestens einem Zeichen, das von dem genannten, ausgewählten Fragment in Echtzeit abgeleitet ist, besteht, und wobei mindestens ein von dem genannten, ausgewählten Nachrichtenfragment in Echtzeit abgeleitetes Zeichen unabhängig von den Zeichen variieren kann, die vom genannten, gewählten, gespeicherten Nachrichtenfragment abgeleitet sind, in Übereinstimmung mit Veränderungen im Wert der entsprechenden Echtzeitbedingung.

2. Anzeigesystem nach Anspruch 1, dadurch gekennzeichnet, daß die genannte Echtzeitsignaleinrichtung (14) eine Mehrzahl von Echtzeitnachrichtenfragmenten aufweist, von denen jedes eine Mehrzahl von Sätzen von binärcodierten Signalen in Echtzeit erzeugt, welche eine entsprechende Anzahl von Zeichen darstellen, und daß die genannten Steuereinrichtung Einrichtungen (36, 56, 26) zum Anlegen der genannten Mehrzahl von Sätzen binärcodierter Signale in Echtzeit an eine entsprechende Anzahl von Zeichenstellen aufweist, die verschieden von den Stellen ist, an welche die genannte Mehrzahl der gespeicherten Sätze von binärcodierten Signalen angelegt werden.

3. Anzeigesystem nach Anspruch 1, dadurch gekennzeichnet, daß die genannten Steuereinrichtungen aus Multiplexern (16, 26, 28) bestehen zur entsprechenden Anlegung der Mehrzahl von Sätzen von binärcodierten Signalen als vollständige Nachricht an die entsprechenden Zeichenstellen der genannten Anzeigevorrichtung.

4. Anzeigesystem nach Anspruch 1, dadurch gekennzeichnet, daß jede der genannten Zeichenstellen der Anzeigevorrichtung (10) einen Satz (24) von Dateneingangsanschlüssen und jede der genannten Zeichenstellen (20, 20) einen Steueranschluß (28) aufweist, welcher mit einem Steuersignal versorgt werden kann, um das an seinem Dateneingangsanschluß auftretende Signal zu steuern und zur Erzeugung eines sichtbaren Zeichens in der Zeichenstelle einzugeben, wobei die genannten Steuereinrichtungen einen Datenbus (26) aufweisen, der mit den Sätzen des Eingangsanschlusses von allen genannten Zeichenstellen verbunden ist, wobei Einrichtungen zum sequentiellen Anlegen der Sätze von codierten Binärsignalen zur Herstellung einer vollständigen Nachricht an den genannten Datenbus und durch Einrichtungen zum sequentiellen

10

Anlegen eines Steuersignals an die genannten Anschlüsse (28, 28) der genannten Zeichenstellen in Phase mit dem Anlegen der genannten Sätze von binärcodierten Signalen an den getrennten Datenbus.

5. Anzeigesystem nach irgendeinem der Ansprüche 1 bis 4, dadurch gekennzeichnet, daß der genannte Speicher (12, 80) Speichereinrichtungen mit wenigstens einer vollständigen Nachricht aufweist, welche aus einer Mehrzahl von gespeicherten Sätzen von binärcodierten Signalen Besteht, welche eine entsprechende Mehrzahl von Zeichen darstellt, wobei die genannte Auswahleinrichtung (18) Einrichtungen zur Auswahl einer in dem genannten Speicher gespeicherten Nachricht aufweist, und daß die genannten Steuereinrichtungen Einrichtungen zum Anlegen der gespeicherten Sätze von binärcodierten Signalen einer ausgewählten, gespeicherten, vollständigen Nachricht an die entsprechenden Zeichenstellen (20, 20) aufweist, um durch die Anzeigevorrichtung eine vollständige, sichtbare Nachricht darzustellen, die aus sämtlichen, von der genannten, gespeicherten, vollständigen Nachricht abgeleiteten Zeichen zusammengesetzt ist.

6. Anzeigesystem nach Anspruch 5, dadurch gekennzeichnet, daß die Zahl der gespeicherten Sätze von binärcodierten Signalen, welche mindestens eine vollständige Nachricht darstellen, gleich der Zahl der Zeichenstellen (20, 20) der genannten Anzeigevorrichtung (10) ist.

7. Anzeigesystem gemäß einem oder mehreren der vorhergehenden Ansprüche, dadurch gekennzeichnet, daß der genannte Speicher (12, 80) ebenfalls Einrichtungen zur Speicherung einer Mehrzahl von vollständigen Nachrichten aufweist, von welchen jede aus einer Mehrzahl von gespeicherten Sätzen von binärcodierten Signalen besteht, wobei die genannte Auswahleinrichtung (18) Einrichtungen zur Auswahl einer der vollständig gespeicherten Nachrichten aufweist und die genannten Steuereinrichtungen (16, 64, 50, 52, 36, 56, 26, 28, 92, 94, 88, 90) ebenfalls betriebsbereit sind, wenn eine vollständig gespeicherte Information durch die genannte Auswählvorrichtung ausgewählt wird, um diese in der Art eines Einsignalsatzes zu einer Einzeichenstelle anzulegen, so daß jeder gespeicherte Satz von binärcodierten Signalen direkt zu seiner entsprechenden Zeichenstelle, ohne an irgendeine andere Zeichenstelle übertragen zu werden, übertragen wird, wobei die Mehrzahl der Sätze von binärcodierten Signalen, welche die genannte, vollständige, gespeicherte Nachricht enthalten, an eine der entsprechenden Zeichenstellen übertragen wird, um zu bewirken, daß die genannte Anzeigevorrichtung unmittelbar eine vollständige, sichtbare Nachricht anzeigt, welche aus der Gesamtheit der Zeichen besteht, welche aus der ausgewählten, vollständig gespeicherten Nachricht abgeleitet ist.

8. Anzeigesystem zur Anzeige von Nachrichten gemäß Anspruch 7, dadurch gekennzeichnet, daß die Zahl der gespeicherten Sätze von binärcodierten Signalen, welche wenigstens eine vollständige Nachricht darstellen, gleich ist der Zahl der Zeichenstellen der genannten Anzeigevorrichtung (10).

9. Anzeigesystem nach Anspruch 7 oder 8, dadurch gekennzeichnet, daß der genannte Speicher (12) Einrichtungen zur Speicherung einer Mehrzahl von gespeicherten Nachrichtenfragmenten aufweist, und daß die genannten Echtzeitsignaleinrichtungen Einrichtungen (44, 92) für die Auswahl von Nachrichtenfragmenten in Echtzeit aufweisen.

10. Anzeigesystem gemäß Anspruch 9, dadurch gekennzeichnet, daß jede der genannten Auswahl der Nachrichtenfragmente in Echtzeit aus einer Mehrzahl von Sätzen von binärcodierten Signalen besteht, welche einer Mehrzahl von Zeichen entsprechen.

11. Anzeigesystem nach einem oder mehreren der vorhergehenden Ansprüche, dadurch gekennzeichnet, daß die genannte Anzeigevorrichtung (10) besteht aus einem Zeichenbus (26), an welchen ein Satz von binärcodierten Signalen angelegt werden kann, einer Mehrzahl von Steueranschlüssen (28, 28), von denen jeder mit einer entsprechenden Zeichenstelle verbunden ist, und aus Einrichtungen, die im Ansprechen auf das Anlegen eines Steuersignals an irgendeinen der genannten Steueranschlüsse zum Anlegen des Satzes von binärcodierten Signalen, die dann an dem genannten Bus der Zeichenstelle, die dem genannten Steueranschluß entspricht, auftreten, betriebsbereit sind, und daß Taktgebereinrichtungen (16) zur Festlegung der entsprechenden Zeitgrößen vorgesehen sind, von denen jede in eine Mehrzahl von aufeinanderfolgenden Zeichenzeiträumen, welche durch eine aufeinanderfolgende Mehrzahl von zeichenauslösenden Signalen bestimmt werden, welche an den Steueranschluß (28) entsprechend einer der genannten Zeichenstellen angelegt werden, und daß Einrichtungen (60, 12, 50, 36, 56) vorgesehen sind, die während jedes Zeitraumes zum aufeinanderfolgenden Anlegen der gespeicherten Sätze von binärcodierten Signalen an den genannten Bus (26) synchron mit den genannten Steuersignalen betriebsbereit sind, und daß Einrichtungen vorgesehen sind, welche während jedes Zeitraumes zum aufeinanderfolgenden Anlegen der genannten Mehrzahl von binärcodierten Signalen in Echtzeit an den genannten Bus synchron mit anderen der genannten Steuersignale betriebsbereit sind.

12. Anzeigesystem nach Anspruch 11, dadurch gekennzeichnet, daß der genannte Speicher (12, 80) Einrichtungen zur Steuerung einer Mehrzahl von Nachrichten aufweist, die über einen Satz von Anschlüssen von Nachrichtenadressen zur Adressierung der genannten, gespeicherten Nachrichtenfragmente adressierbar sind, wobei der genannte Speicher für jede Nachricht eine Mehrzahl von gespeicherten, adressierbaren Speicherplätzen aufweist, die durch einen Satz von Zeichenadreßanschlüssen adressierbar sind, wobei die Zahl der Mehrzahl der Speicherplätze gleich ist der Zahl der Zeichenstellen der Anzeigevorrichtung und an jedem der Speicherplätze ein Satz von binärcodierten Signalen, welche ein Zeichen darstellen, gespeichert sein kann, wobei einige der gespeicherten Nachrichten vollständige Nachrichten und einige andere Nachrichtenfragmente sind, wobei die genannte Auswahlvorrichtung (18) einen ausgewählten, variablen Satz von Nachrichtenadressensignalen zum Anlegen der genannten Anschlüsse der Nachrichtenadressen des genannten Speichers zur Auswahl einer der in dem genannten Speicher gespeicherten Nachrichten erzeugt, wobei die genannte Auswahlvorrichtung ebenfalls Einrichtungen zur Erzeugung eines ausgewählten Signals für eine Echtzeitbedingung umfaßt, die von einem Echtzeitnachrichtenfragment der Echtzeitfühlereinrichtungen ausgewählt wird und wobei Einrichtungen zur Erzeugung eines Reservesignals vorgesehen sind, wenn die gespeicherte Nachricht, die durch einen Satz von Nachrichtenadressensignalen von der genannten Nachrichtenauswählvorrichtung ausgewählt wird, ein Nachrichtenfragment ist, wobei die Einrichtungen (60, 12, 50, 36, 56), die während jedes Zeitraumes für die aufeinanderfolgende Anlegung der gespeicherten Sätze von binärcodierten Signalen an den genannten Bus (26) betriebsbereit sind, Zeichenadressierungseinrichtungen (60) aufweisen, die durch die genannten Taktgebereinrichtungen synchronisiert werden und einen sequentiell veränderten Satz von Zeichenadreßsignalen erzeugten, die an die genannten Zeichenadreßschlüsse des genannten Speichers während aufeinanderfolgend einer der genannten Zeiträume zur sequentiellen Adressierung die Zeichenplätze der adressierten Nachricht synchron mit dem Steuersignal angelegt werden, so daß, wenn der i.-te Zeichenplatz einer Nachricht adressiert wird, die i.-te Zeichenstelle der genannten Anzeigevorrichtung exklusiv gesteuert wird, und durch Einrichtungen, die auf die Abwesenheit des genannten Reservesignals ansprechen zum Anlegen der binärcodierten Signale, die von dem genannte Speicher stammen, an den genannten Zeichenbus (26) während des Auftretens aller genannten Steuersignale jedes Zeitraumes, wodurch die vollständig dargestellte Nachricht in ihrer Gesamtheit von einer gespeicherten Nachricht erzeugt wird, die von dem genannten Speicher abgeleitet wird, und durch Einrichtungen, die auf die Anwesenheit des genannten Reservesignals ansprechen, zum Anlegen binärcodierter Signale an den genannten Zeichenbus, welche von dem Speicher während des Auftretens von einigen der genannten Steuersignale von jedem Zeitraum herrühren und zum Anlegen binärcodierter Signale an den Zeichenbus, welche von der Echtzeitbedingung durch das genannte Echtzeitbedingungswahlsignal während des Auftretens des anderen genannten Steuersignals jedes Zeitraumes ausgewählt sind, herrühren, wodurch die vollständig angezeigte Nachricht teilweise durch ein gespeichertes Nachrichtenfragment, das von dem genannten Speicher abgeleitet ist, und teilweise von einem Echtzeitnachrichtenfragment, welches von den genannten Echtzeitbedingungen abgeleitet ist, erzeugt wird.

13. Anzeigesystem nach Anspruch 12, dadurch gekennzeichnet, daß die genannten Echtzeitsignaleinrichtungen Einrichtungen zur Erzeugung der Echtzeitbedingung umfassen, wobei durch ein Echtzeitbedingungsauswahlsignal ein Echtzeitnachrichtenfragment, bestehend aus einer Mehrzahl von Digits in binärcodierter Dezimalform, ausgewählt ist, wobei der Speicher (82) eine decodierte Nachricht aufweist, worin die an den verschiedenen Speicherplätzen gespeicherten Daten des damit verbundenen Speichers mit der Nachricht derart sind, daß, wenn ein binärcodiertes Dezimalsignal an die genannten Zeichenauswahlanschlüsse angelegt wird, der Ausgang von dem genannten Speicher (12) das Digit definiert, welches durch das binärcodierte Dezimalsignal in dem gleichen Code wie die anderen Ausgangzeichen vom genannten Speicher, wenn andere Nachrichten adressiert werden, dargestellt wird, wobei Einrichtungen (88) in die genannten Nachrichtenanschlüsse eingreifen, um die genannte, decodierte Nachricht zu adressieren, wenn das genannte Reservesignal vorhanden ist und während des Auftretens von Zeiträumen, die durch das genannte Reservesignal reserviert sind, wobei Einrichtungen (90, 92) in Betrieb sind, wenn das genannte Reservesignal vorhanden ist, und während des Auftretens vor Zeiträumen, die durch das genannte Reservesignal reserviert sind, für das Aufeinanderfolgende Anlegen der genannten Mehrzahl von binärcodierten Dezimaldigits an die genannten Zeichenadreßanschlüsse zum Ausschluß der Zeichenadreßsignale von den genannten Zeichenadreßeinrichtungen.

14. Anzeigesystem nach Anspruch 12 oder 13, dadurch gekennzeichnet, daß jede der genannten Anzeigestellen der genannten Anzeigevorrichtung n-Segmente (22, 22) aufweist, von denen jedes individuell sichtbar oder nicht sichtbar ist und welche so angeordnet sind, daß gleichzeitig verschiedene Kombinationen von Segmenten mit verschieden geformten Zeichen sichtbar gemacht werden können und der genannte Speicher (12) an jedem Speicherplatz n-Binärzellen aufweist, welche ein binäres Signal mit n-Bits speichern und entsprechend mit den n-Segmenten der Anzeigestelle verbunden ist und ein Zeichen in Übereinstimmung mit dem visuellen oder nicht visuellen Status jedes der n-Segmente zu codieren und wie gewünscht das Zeichen an der Anzeigestelle zu bilden.

15. Anzeigesystem nach Anspruch 12 oder 13, dadurch gekennzeichnet, daß jede Anzeigestelle der Anzeigeeinrichtung (10) n-Segmente (22, 22) aufweist, von denen jedes individuell sichtbar oder nicht sichtbar gemacht werden kann und welche so angeordnet sind, daß durch gleichzeitige Sichtbarmachung verschiedene Kombinationen von Segmenten verschiedener Zeichen geformt werden, können, wobei der genannte Speicher (82) von jedem genannten Speicherplatz x-Binärzellen zur Speicherung eines Zeichens in einem x-Bitcode aufweist, wobei x geringer als n ist, und daß ein Codekonverter (84) zwischen dem genannten Speicher in dem genannten Bus zur Umwandlungs des Zeichenausgangs von dem genannten Speicher im x-Bitcode in einen n-Bitcode vorgesehen ist, worin die n-Bits jedes Zeichens des genannten n-Segmentes der Anzeigeeinrichtung entsprechen.

**Revendications**

1. Système d'affichage de messages, le système comprenant:

(a) un dispositif d'affichage visuel unitaires (10) comportant une pluralité de stations de caractère (20, 20) à chacune desquelles un caractère quelconque d'un jeu donné de caractères qui peut être affiché par application d'un groupe de signaux codés binaires;

(b) une mémoire (12, 80) comportant des moyens pour emmagasiner une pluralité de fragments de message consistant chacun en une pluralité de groupes mémorisés de signaux codés binaires qui représentent une pluralité correspondante de caractères,

(c) un sélecteur de message (18) comportant des moyens de sélection parmi lesdits fragments de message emmagasinés dans ladite mémoire; et

(d) des moyens d'acheminement (16, 64, 50, 52, 36, 56, 26, 92, 94, 88, 90) pour appliquer sensiblement simultanément lesdits groupes mémorisés de signaux codés binaires desdits fragments de message emmagasinés choisis à des premières stations correspondantes parmi lesdites stations de caractère, à raison d'un groupe de signaux pour une station de caractère, de sorte que chaque groupe mémorisé de signaux codés binaires est transmis directement à sa station de caractère correspondante sans être transmis à aucune autre desdites stations de caractère; caractérisé en ce qu'il comprend:

(e) des moyens (14) d'élaboration de signaux en temps réel comportant une pluralité de dispositifs qui fournissent des données en temps réel représentant la valeur d'une pluralité de conditions en temps réel et quie fournissent une pluralité de fragments de message variables en temps réel, chacun de ces fragments de message en temps réel correspondant à une condition respective desdites conditions en temps réel et chacun de ces fragments de message en temps réel consistant en au moins un groupe en temps réel de signaux codés binaires représentant au moins un caractère, chacun desdits fragments de message en temps réel étant variable dans le temps suivant les variations de la valeur de sa condition en temps réel correspondante, de manière à représenter à tout instant donné la valeur instantanée de ladite condition correspondante;

(f) ledit sélecteur de message (18) comportant des moyens de sélection simultanée parmi ladite pluralité de fragments de message emmagasinés et parmi ladite pluralité de fragments de message variables en temps réel, de manière à provoquer l'affichage d'un message significatif complet comprenant deux de ces fragments; et

(g) lesdits moyens d'acheminement servant à appliquer, sensiblement en même temps que l'application desdits groupes mémorisés de signaux codés binaires auxdites premières stations desdites stations de caractère, ledit au moins un groupe de signaux codés binaires dudit fragment de message en temps réel choisi à au moins une autre station correspondante desdites stations de caractère qui diffère desdites premières des stations de caractère, à raison d'un groupe de signaux pour une station de caractère, de sorte que chaque groupe en temps réel de signaux codés binaires est transmis directement à sa station de caractère correspondante sans être transmis à aucune autre desdites stations de caractère, afin de provoquer l'affichage immédiat par ledit dispositif d'un message visuel unitaire complet constitué en partie de caractères provenant desdits fragments de message emmagasinés choisis et en partie d'au moins un caractère provenant dudit fragment de message en temps réel choisi, et ledit au moins un caractère provenant dudit fragment de message en temps réel choisi pouvant varier indépendamment des caractères provenant dudit fragment de message emmagasiné choisi tout en suivant les variations de la valeur de la condition en temps réel correspondante.

2. Système d'affichage de messages suivant la revendication 1, caractérisé en outre en ce que les moyens (14) d'élaboration de signal en temps réel fournissent une pluralité de fragments de message en temps réel comprenant chacun une pluralité de groupes en temps réel de signaux codés binaires représentant une nombre correspondant de caractères et en ce que lesdits moyens d'acheminement comprennent des moyens (36, 56, 26) pour appliquer ladite pluralité de groupes en temps réel de signaux codés binaires à une pluralité correspondante desdites stations de caractère qui différent des stations auxquelles ladite pluralité de groupes mémorisés de signaux codés binaires est appliquée.

3. Système d'affichage de messages suivant la revendication 1, caractérisé en ce que lesdits moyens d'acheminement sont des moyens de multiplexage (16, 26, 28) pour appliquer répétitivement la pluralité de groupes de signaux codés binaires constituant un message complet aux stations de caractère correspondant dudit dispositif d'affichage.

4. Système d'affichage de messages suivant la revendication 1, caractérisé en outre en ce que chacune des desdites stations de caractère dudit dispositif d'affichage (10) comporte un ensemble (24) de bornes d'entrée de données et chacune desdites stations de caractère (20, 20) comporte une borne de validation (28) qui peut recevoir un signal de validation pour permettre au signal, apparaissant à sa borne d'entrée de données, d'entrer dans la station afin d'engendrer un caractère visuel, et en ce que lesdits moyens d'acheminement comprennent un bus de données (26) raccordé aux ensembles de bornes d'entrée de toutes lesdites stations de caractère, des moyens pour appliquer séquentiellement les groupes de signaux codés binaires constituant un message complet audit bus de données, et des moyens pour appliquer séquentiellement un signal de validation aux dites bornes de validation (28, 28) desdites stations de caractère en phase avec l'application desdits groupes de signaux codés binaires audit bus de données.

5. Système d'affichage de messages suivant l'une quelconque des revendications 1 à 4, caractérisé en outre en ce que ladite mémoire (12, 80) comprend également des moyens pour emmagasiner au moins un message complet constitué d'une pluralité de groupes mémorisés de signaux codés binaires représentant une pluralité correspondante de caractères, en ce que ledit sélecteur de message (18) comprend également des moyens pour la sélection dudit au moins un message complet emmagasiné par ladite mémoire, et en ce que les moyens d'acheminement comprennent des moyens pour envoyer les groupes mémorisés de signaux codés binaires d'un message complet emmagasiné choisi à des stations correspondantes desdites stations de caractère (20, 20), de manière à ce que le dispositif d'affichage affiche un message visuel complet constitué entièrement de caractères provenant du message complet emmagasiné choisi.

6. Système d'affichage de messages suivant la revendication 5, caractérisé en outre en ce que lesdits groupes mémorisés de signaux codés binaires représentant ledit au moins un message complet sont en nombre égal au nombre de stations de caractère (20, 20) dudit dispositif d'affichage visuel (10).

7. Système d'affichage de messages suivant l'une quelconque des revendications précédentes, caractérisé en ce que ladite mémoire (12, 80) comprend également des moyens de stockage d'une pluralité de messages complets consistant chacun en une pluralité de groupes mémorisés de signaux codés binaires, en ce que ledit sélecteur de message (18) comprend des moyens de sélection d'un desdits messages stockés complets, et en ce que lesdits moyens d'acheminement (16, 64, 50, 52, 36, 56, 26, 28, 92, 94, 88, 90) fonctionnent également, lorsqu'un message stocké complet est sélectionné par ledit sélecteur de message, pour une transmission à raison d'un groupe de signaux pour une station de caractère de sorte que chaque groupe mémorisé de signaux codés binaires est transmis directement à sa station de caractère correspondante sans être transmis à aucune autre desdites stations de caractère, la pluralité de groupes de signaux codés binaires constituant ledit message stocké complet étant transmis à des stations correspondantes desdites stations de caractère pour provoquer l'affichage immédiat par le dispositif d'affichage d'un message visuel complet constitué entièrement de caractères provenant dudit message stocké complet sélectionné.

8. Système d'affichage de message suivant la revendication 7, caractérisé en outre en ce que lesdits groupes mémorisés de signaux codés binaires représentant ledit au moins un message complet sont en nombre égal au nombre de stations de caractère dudit dispositif d'affichage visuel (10).

9. Système d'affichage de messages suivant la revendication 7 ou la revendication 8, caractérisé en outre en ce que ladite mémoire (12) comprend des moyens pour stocker une pluralité de fragments de message emmagasinés, et en ce que lesdits moyens d'élaboration de signaux en temps réel comprennent des moyens (44, 92) fournissant une sélection de fragments de message en temps réel.

10. Système d'affichage de messages suivant la revendication 9, caractérisé en outre en ce que chacun desdits fragments de message en temps réel sélectionnées consiste en une pluralité de groupes de signaux codés binaires représentant une pluralité correspondante de caractères.

11. Système d'affichage de message suivant l'une quelconque des revendications précédentes, caractérisé en ce que le dispositif d'affichage visuel (10) comprend un bus de caractères (26) auquel un groupe de signaux binaires peut être appliqué, une pluralité de bornes de validation (28, 28) associées chacune à une station respective desdites stations de caractère, et des moyens qui fonctionnent en réponse à l'application d'un signal de validation à l'une quelconque desdites bornes de validation de manière à appliquer le groupe de signaux codés binaires, qui apparaît alors sur ledit bus, à la station de caractère correspondant à ladite borne de validation, en ce qu'il comprend des moyens d'horloge (16) définissant des séquences de temps répétitives divisées chacune en une pluralité de tranches de temps de caractère successives définies par une pluralité successive de signaux de validation de caractère appliqués chacun à la borne de validation (28) d'une station respective desdites stations de caractère, et en ce qu'il comprend des moyens (60, 12, 50, 36, 56) qui fonctionnent pendant chaque séquence de manière à envoyer successivement lesdits groupes mémorisés de signaux codés binaires sur ledit bus (26) en synchronisme avec certains desdits signaux de validation, et des moyens qui fonctionnent pendant chaque séquence de manière à envoyer successivement ladite pluralité de signaux codés binaires en temps réel sur ledit bus en synchronisme avec d'autres desdits signaux de validation.

12. Système d'affichage de messages suivant la revendication 11, caractérisé en ce que ladite mémoire (12, 80) comprend des moyens pour emmagasiner une pluralité de messages adressables par l'intermédiaire d'un ensemble de bornes d'adresse de message pour l'adressage desdits fragments de message emmagasinés, ladite mémoire comportant pour chacun desdits messages une pluralité d'emplacements de mémoire adressables par l'intermédiaire d'un ensemble de bornes d'adresse de caractère, cette pluralité d'emplacements de mémoire étant en

FIG. 1

FIG. 2